# FASCICULE DE BREVET EUROPEEN

(11) **EP 2 223 006 B1**
(45) Date de publication et mention de la délivrance du brevet: **04.05.2011**
(21) Numéro de dépôt: 08857474.4
(22) Date de dépôt: 19.11.2008
(51) Int. Cl.: F17C 13/04, F17D 1/04, H01L 21/00

(54) **ARMOIRE A GAZ MINIATURE**
MINIATURGASSCHRANK
MINIATURE GAS CABINET

(30) Priorité: 22.11.2007 FR 0759210
(43) Date de publication de la demande: 01.09.2010
(73) Titulaire: Air Liquide Electronics Systems, 75007 Paris (FR); L'Air Liquide Société Anonyme pour l'Etude et l'Exploitation des Procédés Georges Claude, 75007 Paris (FR)
(72) Inventeur: BOURASSEAU, Cyril, F-38000 Grenoble (FR); RAMEAU, Guillaume, 92100 Boulogne Billancour (FR)
(74) Mandataire: Grout de Beaufort, François-Xavier
(86) Numéro de dépôt international: PCT/FR2008/052080
(87) Numéro de publication internationale: WO 2009/071798

(56) Documents cités:
- EP-A- 0 655 578
- EP-A- 0 916 891
- EP-A- 1 037 269
- EP-A- 1 180 638
- EP-A- 1 316 755
- DE-A1- 19 818 306
- DE-U1- 8 703 198
- LU-A1- 86 802

## Description

La présente invention concerne un dispositif de distribution de gaz spéciaux (ESG) pour une utilisation lors d'applications spécifiques et ponctuelles ayant lieu dans l'industrie du silicium et plus particulièrement dans l'industrie microélectronique, photovoltaïque, optoélectronique ou encore des semi-conducteurs. Le dispositif selon l'invention est également utilisable par des laboratoires mettant en oeuvre des gaz, par exemple des gaz toxiques ou inflammables, en particulier les laboratoires en lien avec l'industrie du silicium.

Beaucoup d'installations industrielles exigent un équipement capable de commander automatiquement l'approvisionnement en gaz et fluides de certains équipements. La fabrication des circuits intégrés inclut généralement plusieurs procédés tels que, par exemple, la déposition en phase vapeur dans laquelle une variété de gaz est amenée dans une chambre de réaction dans laquelle est confiné un substrat de semi-conducteur. La température et la pression de dépôt des diverses couches de matériaux développés pour créer les modèles tridimensionnels de circuits intégrés sont soigneusement contrôlées dans cette enceinte.

Toutes les substances transportées dans et hors de la chambre de réaction doivent être constamment surveillées, puisque les proportions des différents réactifs qui constituent l'atmosphère de vapeur déterminent finalement les dimensions physiques des éléments qui composeront collectivement un circuit électrique simple et vaste sur un morceau minuscule de silicium, notamment des transistors, des condensateurs, et des résistances. Une des plus grandes causes de mauvais fonctionnement des circuits intégrés est attribuable aux particules de poussière microscopiques qui contaminent la zone de travail où le circuit est fabriqué. Un corps étranger minuscule peut endommager un circuit très cher et le rendre inutilisable. Afin de se protéger d'une telle contamination particulaire, les fabricants de semi-conducteurs fabriquent leurs produits dans un environnement de "salle blanche" protégée.

L'air admis dans une salle blanche est d'abord filtré, éliminant ainsi presque entièrement les particules de poussière non désirées. Les techniciens qui travaillent dans ces environnements, portent une tenue et des masques spéciaux qui empêchent l'introduction de substances qui endommageraient leur travail méticuleux. Les coûts liés à la maintenance et au bon fonctionnement de cet environnement fortement spécialisé sont considérables. En conséquence, tout l'espace d'une salle blanche doit être utilisé le plus efficacement possible.

Outre ce besoin critique, les produits chimiques utilisés doivent être distribués avec grand soin. Les produits chimiques liquides ainsi que les gaz spéciaux utilisés dans l'industrie des semi-conducteurs sont souvent toxiques. Les dispositifs choisis pour distribuer ces produits potentiellement dangereux, doivent assurer un usage fiable, protégé de la corrosion ou de la fuite.

Dans un système classique de distribution de gaz, les grands volumes de gaz à purger, potentiellement dangereux, créent des problèmes de sûreté. Les ensembles de tuyauterie et d'ajustage de précision sont également enclins aux fuites ou à des dommages graves pendant l'utilisation. Ces installations ne sont donc pas adaptées à des utilisations ponctuelles nécessitant des déconnexions et des purges fréquentes multipliant les risques pour l'opérateur d'être exposé à des gaz dangereux.

Jusqu'à présent, l'emploi de dispositifs d'armoires à gaz (en anglais « gas cabinet ») pour la distribution des gaz spéciaux montre que la sûreté, le coût, et le temps d'arrêt des commandes ne sont pas optimisés pour des applications ponctuelles. Ces « gas cabinets » standards sont surtout utilisables de manière courante et fiable pour des applications de production et de distribution à longue durée. Ces systèmes sont installés intégralement dans des grandes armoires dans des pièces dédiées pouvant se trouver à plusieurs dizaines de mètres de l'équipement auquel ils sont raccordés. Quand un entretien, un calibrage, un test, une qualification de nouvelles sources d'ESG pour des procédés existants, une évaluation de nouveaux procédés impliquant l'utilisation d'ESG sur des machines existantes, ou une réparation sont exigés, la déconnexion de la ligne de distribution d'un « gaz cabinet » peut être nécessaire, et ce pendant une période prolongée.

En ce qui concerne les laboratoires, du fait du coup important d'un « gas cabinet » standard, la distribution de gaz potentiellement dangereux se fait même parfois sans armoire sous extraction, augmentant les risques pour l'opérateur, notamment au moment de la connexion/déconnexion d'une bouteille.

Il n'existe pas de dispositif de distribution spécifiquement dédié aux applications spécifiques mentionnées précédemment et comportant un système leur permettant d'être adapté à n'importe quelle bouteille sans la modifier. Les demandes de brevet EP1316755, EP0916891, considéré comme reflétant d'art antérieur le plus proche, et EP1180638 présentent des systèmes de distribution de gaz miniatures montés à la place du robinet standard d'une bouteille. Ceci implique que ce type de système est spécifique à la bouteille sur laquelle il est monté et n'est donc pas utilisable pour d'autres bouteilles. En ce sens, il ne répond pas aux exigences de flexibilité, mobilité, d'encombrement minimum et de faible coût que requièrent les applications visées par la présente invention.

La solution utilisée à l'heure actuelle pour la distribution de gaz spéciaux dans les laboratoires ou pour les applications citées précédemment est l'emploi d'un « gas cabinet » standard. Ce « gas cabinet » peut être, soit déjà en utilisation pour la distribution de gaz vers un équipement donné, soit investi spécialement.

L'utilisation d'un « gas cabinet » standard est inadaptée pour les applications spécifiques mentionnées précédemment, et cela peut poser des risques notamment dus aux purges et déconnexions potentielles. En effet, un « gas cabinet » standard est particulièrement mal adapté à ce type d'applications du fait de son coût, son encombrement, sa complexité et les contraintes de mise en service comme les raccords vers l'équipement. Dans l'industrie microélectronique, ces genres de tests peuvent être effectués avec le « gas cabinet » utilisé en production et relié à la machine dans laquelle sont réalisés les essais. Cependant, l'utilisation d'un « gas cabinet » standard, typiquement localisé dans un local spécifique de l'usine de production, nécessite par exemple de purger de longues lignes avant de pouvoir connecter une nouvelle bouteille de gaz à tester. De plus, dans l'industrie microélectronique, un dispositif de distribution peut potentiellement être utilisé par plusieurs équipements. La mise à disposition d'un dispositif de distribution pour des applications ponctuelles peut impliquer un arrêt inutile d'équipements non concernés par les tests.

Une autre solution peut consister à acheter un « gas cabinet » standard dédié à ce type de test. Cette solution a un coût très important dû au coût du dispositif de distribution mais aussi au coût de raccordement à la machine. De plus, un « gas cabinet » standard tient une place fixe, ce qui implique soit de tirer des lignes vers tous les équipements susceptibles de subir des tests, soit de multiplier les « gas cabinets ». Dans les deux cas, le coût de l'opération est prohibitif.

Ainsi donc, ni l'achat d'un « gas cabinet » standard, ni l'utilisation d'un « gas cabinet » existant n'est une solution adaptée à ce type d'applications. En outre, tout équipement utilisé dans une salle blanche doit occuper un volume réduit au maximum.

Le développement d'un dispositif de distribution de gaz spéciaux miniaturisé, utilisable avec n'importe quelle bouteille de gaz, sûr, à commande automatisée intelligente, utilisable dans l'industrie du silicium et plus particulièrement dans l'industrie microélectronique, photovoltaïque, optoélectronique ou encore des semi-conducteurs, ou bien utilisable au sein de laboratoires constituerait un progrès technologique important. La mise en oeuvre d'un dispositif si innovateur satisferait à un long besoin dans de telles industries.

Un but de la présente invention est de pallier tout ou partie des inconvénients de l'art antérieur relevés ci-dessus.

Les listes d'applications ci-dessus ne sont bien entendu pas exhaustives et l'invention peut aussi répondre aux besoins de structures telles que les laboratoires pour des applications ne nécessitant pas la mise en service d'un « gas cabinet » classique trop cher et plus contraignant. En outre, le dispositif selon l'invention permet son utilisation pour les applications décrites ci-dessus, directement dans la salle blanche, au plus près de l'équipement à tester.

A cette fin, la présente invention a pour objet un dispositif de distribution de gaz spéciaux apte à être monté sur une bouteille de gaz munie d'un robinet (quel que soit la bouteille de gaz), sans apporter de modifications à la bouteille, munie d'un robinet : tel que défini par la revendication 1.

Ce systèm de distribution de gaz comprend une enceinte enveloppant le robinet de la bouteille et pouvant être relié à un système d'extraction afin de protéger l'opérateur de fuites potentielles de gaz dangereux. Les éléments du dispositif de distribution susceptibles de fuir et donc d'exposer l'opérateur à des gaz dangereux sont placés dans cette enceinte sous extraction afin de limiter les risques d'exposition. Le volume de l'enceinte sous extraction est très réduit, c'est-à-dire inférieur à 27000 cm³.

Le système d'extraction est un dispositif pour la distribution des gaz spéciaux toxiques, corrosifs ou inflammables ou même inertes.

Un système d'extraction comprend une pompe qui crée une dépression dans une canalisation reliée au dispositif de la présente invention au niveau du raccord d'extraction situé sur la partie. Il permet de renouveler l'air à l'intérieur de l'armoire miniature (du fait de la dépression et de l'aspiration de la pompe) où se trouvent la bouteille et le dispositif de distribution (vannes, tuyauterie, capteurs...).

Ceci procure l'avantage de protéger l'opérateur en cas de fuite du système lors de la distribution de gaz. En effet, si le système de distribution fuit, les gaz sont aspirés et envoyés vers un système de traitement approprié. Le débit d'extraction est calculé de façon à respecter des recommandations assurant la sécurité de l'opérateur. En cas de fuite, les gaz ne peuvent donc pas stagner dans l'armoire ou en sortir, ce qui constituerait un danger pour l'opérateur.

Par gaz spéciaux on entend tous les gaz généralement utilisés dans l'industrie des semi-conducteurs. Il peut s'agir de gaz inertes, toxiques, corrosifs, ou pyrophoriques. Ces gaz spéciaux peuvent être choisis parmi : HF, WF6, BC13, CIF3, DCS, 3MS, C4F6, C4F80, C4F8, Butane, S02, Cl2, C3F8, NH3, Propane, SF6, HBr, C2F6, CH3F, HCl, CHF3, N2O contenus dans une bouteille B sous forme liquéfiée, ou encore parmi F2, PH3, B2H6, NO, NF3, SiH4, CF4, CH4, CO contenus dans la bouteille B sous forme comprimée. Ainsi selon la nature du gaz à distribuer et son état, liquéfié ou comprimé, la pression à l'intérieur de la bouteille B est comprise entre 0 bar et 200 bars.

L'invention est destinée à des applications spécifiques, ponctuelles et pouvant être non continues dans le temps, autres que les applications de production, concernant des gaz pouvant être liquéfiés ou bien comprimés. Des caractéristiques essentielles de l'invention sont donc le caractère mobile et la taille miniature du dispositif comprenant le bloc multifonctions ainsi que la simplification de l'agencement des composants du dispositif selon l'invention comparée à une installation standard telle qu'un « gas cabinet ».

Par ailleurs, des modes de réalisation de l'invention peuvent comporter l'une ou plusieurs des caractéristiques suivantes :
- le dispositif décrit ci-dessus peut comprendre en outre un générateur de vide. Le générateur de vide est un venturi ou une mini pompe électrique. D'autre part, le dispositif selon l'invention peut comporter un commutateur d'interruption de secours.
- Selon un objet de l'invention, le dispositif est caractérisé en ce que le système de purge est un système dit de purge en croix comprenant un premier conduit dit de pressurisation, un deuxième conduit de sortie permettant de faire le vide et un troisième conduit d'extraction permettant d'acheminer le gaz à distribuer vers un équipement, les trois conduits étant reliés en un point A situé en aval du détendeur.
- Selon un objet de l'invention, le dispositif est caractérisé en ce que le bloc multifonctions comprend en outre un capteur de pression en amont du détendeur.
- Selon un objet de l'invention, le dispositif est caractérisé en ce que le bloc multifonctions comprend en outre un capteur de pression en aval du détendeur et en amont du système de purge.
- Selon un objet de l'invention, le dispositif est caractérisé en ce qu'il comprend un raccord situé sur une de ses parois extérieures pouvant être connecté à un système d'extraction.
- Selon un objet de l'invention, le dispositif comprend un système de commande électrique permettant l'actionnement des vannes pneumatiques, la gestion des capteurs de pression et des cycles de purge.
- Selon l'invention, le dispositif comprend un collier pourvu d'éléments de fixation tels qu'un taraudage, prévu pour coopérer avec des éléments complémentaires de fixation au robinet d'une bouteille. Ceci permettant de fixer le dispositif de distribution sur n'importe quelle bouteille.
- Selon un objet de l'invention, le volume dudit dispositif de distribution de gaz est compris entre 1000 cm³ à 27000 cm³. A titre de comparaison, un « gas cabinet » standard utilisé jusqu'ici pour le type d'applications exposées ci-dessus, présente un volume de l'ordre de 600000 à 700000 cm³.

Le volume du bloc multifonctions est compris entre 1/4 et 4/5, notamment entre 1/3 et 4/5 et de préférence entre 2/5 et 4/5 du volume dudit dispositif objet de l'invention. Plus particulièrement, le volume du bloc multifonctions est environ égal à la moitié du volume dudit dispositif de distribution objet de l'invention.
- Un autre objet de l'invention consiste en un ensemble de distribution de gaz spéciaux constitué d'une bouteille contenant du gaz à une pression P1 et d'un dispositif de distribution de gaz spéciaux tel que décrit ci-dessus, caractérisé en ce que, en position verticale d'utilisation, l'empreinte au sol dudit ensemble est égal au diamètre de la bouteille. La pression P1 du gaz dans la bouteille est comprise entre 0 bar et 200 bars.

Selon un aspect particulier de l'invention, la pression en sortie du détendeur est inférieure à 10 bars.

Plus particulièrement, lorsque P1 est inférieure à 8 bars et lorsque l'équipement alimenté le permet, le bloc multifonctions ne comporte pas de détendeur haute pression.
- Un autre objet de l'invention consiste en un procédé de qualification d'une source de gaz spéciaux comprenant :
- une étape de soutirage d'un gaz à partir d'une bouteille munie d'un robinet;
- une étape de distribution du gaz au moyen d'un dispositif de distribution tel que décrit ci-dessus.
- Un autre objet de l'invention consiste en une utilisation du dispositif tel que décrit ci-dessus pour la qualification d'une nouvelle source de gaz spéciaux.
- Un autre objet de l'invention consiste en une utilisation du dispositif tel que décrit ci-dessus pour l'évaluation de nouveaux procédés mettant en oeuvre l'utilisation de gaz spéciaux sur des machines existantes.

En effet, dans l'industrie des semi-conducteurs, différents types de machines peuvent être utilisés, notamment des machines dites de dépôt, par exemple les machines CVD, ou dites de gravure. Ces différentes machines fonctionnent avec un certain gaz choisi parmi les ESG. Si un nouveau gaz vient à être utilisé pour ces machines, ce dernier nécessitera alors un test de qualification.

Ce test étant destiné à qualifier la compatibilité de la nouvelle source de gaz avec la machine. Par exemple, la pureté du nouveau gaz pourrait ne pas être conforme à celle nécessaire, ce qui engendrerait des inconvénients majeurs quant aux couches déposées. D'autre part, ces machines existantes sont mises en oeuvre lors d'un procédé prédéfini et destiné à un type de dépôt. Néanmoins il est courant de vouloir modifier le type de dépôt pour une nouvelle application (autre gaz ou autres débits par exemple), tout en utilisant les mêmes machines. Avec les dispositifs actuels, il faut déconnecter le « gas cabinet » et donc arrêter temporairement la ligne de production pour effectuer les tests de compatibilité pour une éventuelle nouvelle application. Le dispositif selon l'invention ainsi utilisé permet d'éviter l'achat d'une nouvelle machine ou l'arrêt de toute une ligne, ce qui nécessiterait des coûts exorbitants.

Un filtre peut optionnellement être intégré en amont et/ou en aval du détendeur. Ceci permettant la protection du détendeur ainsi que l'assurance de la pureté du gaz distribué, le cas échéant. Ceci est un autre avantage par rapport à l'utilisation d'un « gas cabinet » standard.

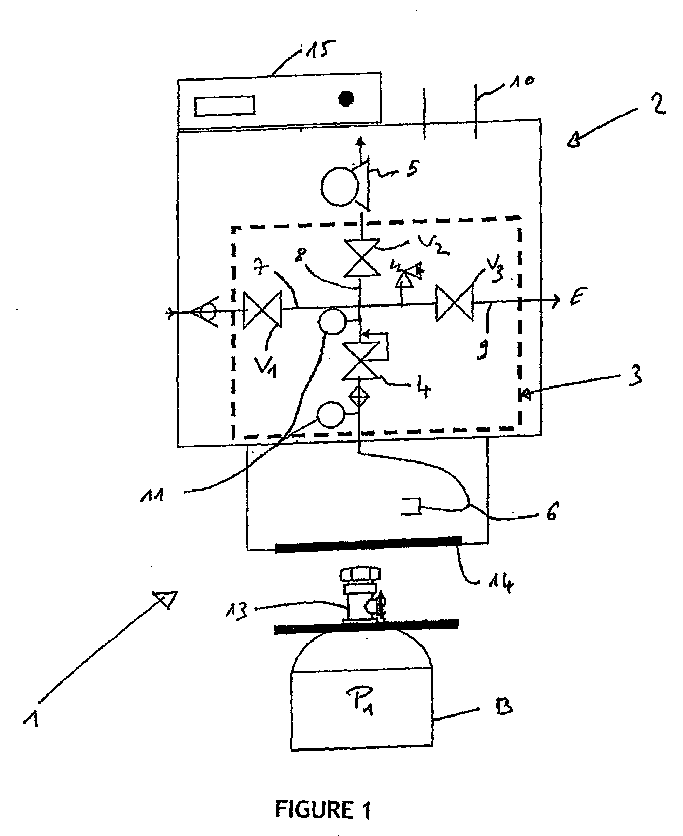

D'autres particularités et avantages apparaîtront à la lecture de la description ci-après, faite en référence à la figure 1.

La figure 1 représente un schéma simplifié du dispositif selon l'invention.

Sur la figure 1 est représenté un ensemble 1 de distribution de gaz spéciaux constitué d'une bouteille B de gaz et d'un dispositif 2 de distribution de gaz spéciaux apte à être fixé sur la bouteille B.

Le dispositif 2 comporte un générateur de vide 5 et un bloc 3 multifonctions comprenant un unique détendeur haute pression 4, un système de purge comprenant trois vannes V1, V2 et V3, et un moyen de connexion 6 vers le contenu de la bouteille B.

Le détendeur 4 est situé en amont du système de purge, de sorte que le gaz provenant de la bouteille B à une pression P1, parvient au détendeur 4 à cette pression P1. En sortie du détendeur 4, le gaz circule à une pression de l'ordre de quelques bars, c'est-à-dire à basse pression.

En conséquence, les vannes V1, V2 et V3, ainsi que tous les autres composants susceptibles d'être compris dans le bloc multifonctions 3 subissent un gaz à basse pression. Ceci est un avantage considérable en termes de fiabilité, de sécurité et de durée de vie des composants. En outre cela diminue les risques de fuites.

D'autre part, cette caractéristique permet la miniaturisation de composants tels que les actionneurs des vannes à membrane, les conduits de gaz et les joints, par exemple, ainsi qu'une simplification de leur agencement conduisant donc à un « mini gas cabinet » c'est-à-dire à un volume du dispositif 2 ou « mini gas cabinet » considérablement réduit, par exemple compris entre 1000 cm³ à 27000 cm³, grâce, notamment à la miniaturisation du bloc multifonctions 3 compris dans ce « mini gas cabinet» 2.

Le système de purge comporte un premier conduit 7 sur lequel est située la vanne V1, destiné à recevoir un gaz de purge G pressurisant le circuit, lorsque la vanne V1 est ouverte. Ledit gaz de purge G peut être choisi parmi l'azote, l'argon, et l'hélium. De manière préférée, l'azote est utilisé pour la purge. Un deuxième conduit 8 comportant la vanne V2 est destiné à relier le premier conduit 7 au générateur de vide 5, qui peut être un venturi ou une mini pompe électrique. La connexion peut aussi être laissée libre pour permettre une connexion à un système externe de vide.

Ces deux premiers conduits 7 et 8 sont reliés en un point A situé en aval du détendeur 4, au conduit 9 contenant la vanne V3 destiné à alimenter l'équipement E lorsque la vanne V3 est ouverte.

Les systèmes de purges classiques comportent en général, en outre, une vanne dite d'isolation en amont du détendeur. Cette vanne d'isolation est en principe nécessaire en cas de fuites ou d'alertes dues à un possible danger d'accident suite à un dysfonctionnement du système. En effet, cette vanne a pour fonction de fermer le système de distribution en pareille situation. Cela n'est pas nécessaire ici car le volume du bloc 3 est si faible que le risque de fuite entre la bouteille B et le détendeur 4 est considérablement réduit. D'autre part, cette vanne devient inutile car les applications du système selon l'invention sont très ponctuelles, par ce qui implique la présence permanente d'un opérateur à côté du dispositif, capable de stopper lui même l'application en cas d'alerte. Dans le cas d'une bouteille comportant une vanne pneumatique, celle-ci peut également être contrôlée par le dispositif selon l'invention. Le dispositif selon l'invention ne contient donc aucun élément sensible en contact d'un gaz sous haute pression.

Le dispositif de distribution 2, objet de la présente invention peut également comporter un évent 10 permettant une extraction du gaz en cas de fuite. En effet, les gaz spéciaux utilisés dans l'industrie des semi-conducteurs sont dangereux. C'est pour cette raison que les dispositifs de distribution de gaz spéciaux standards sont enfermés dans une armoire (« gas cabinet » en anglais). Ici, la miniaturisation du dispositif permet d'enfermer les composants présents en nombre limité et disposés de manière simplifiée dans un bloc multifonctions 3 de volume réduit, assurant la protection nécessairement requise.

Le dispositif 2 de distribution peut également comporter dans son bloc multifonctions 3 des capteurs de pression 11 par exemple disposés en amont et/ou en aval du détendeur.

Ce système de fixation permet donc au dispositif 2 de distribution selon l'invention d'être adaptable à n'importe quelle bouteille de gaz conventionnelle, ce qui procure un avantage sans précédent pour les applications concernées par la présente invention.

La commande du dispositif de distribution 2 est effectuée par l'intermédiaire d'un système électrique 15 permettant la commande des vannes pneumatiques V1, V2 et V3 ainsi que l'automatisation de la séquence de purge.

Ce système électrique 15 comporte par exemple une alimentation électrique, des électrovannes servant à actionner les vannes pneumatiques, un contrôleur logique, un bouton d'arrêt d'urgence, un écran, par exemple un écran LCD, pour visualiser l'état du système.

Le mécanisme de commande consiste par exemple en un contrôleur logique programmable. Un tel contrôleur logique peut être choisi parmi ceux existants dans le commerce. Ainsi, le système selon l'invention permet, outre les avantages présentés ci-dessus, d'être adapté pour des mécanismes de commande du commerce. De préférence, le mécanisme de commande choisi est le plus simple et donc le moins coûteux possible. En effet la miniaturisation du système selon l'invention étant liée à une grande simplification des éléments le composant ainsi qu'à une simplification de leur agencement, l'emploi d'un mécanisme de commande simplifié est largement envisageable, contrairement aux « gas cabinets » standards, en général d'une grande complexité.

Le volume considérablement diminué de l'unité réduit la quantité de gaz de travail dans le dispositif à n'importe quel moment, comparée aux quantités de gaz tenues dans des « gas cabinets » conventionnels, associés à leur ligne de distribution, beaucoup plus grands. Cette réduction de volume total permet un temps minimum d'évacuation du dispositif et des résultats bien meilleurs dans un système de gestion beaucoup plus sûr. La présente invention garantit une manipulation sécurisée et rapide des gaz toxiques, corrosifs, inflammables et pyrophoriques.

La présente invention permet de réduire le nombre de pièges particulaires dans le bloc multifonctions 3. L'invention met en oeuvre un dispositif présentant des moyens d'installation, de dépannage et de modification rapides et faciles. II est en effet simple de transporter et de manipuler cette unité légère.

L'invention décrite présente une structure simplifiée et adaptée aux applications visées, ce qui permet de minimiser le coût du produit et son encombrement. Le composant principal du « mini gaz cabinet » objet de la présente invention, c'est-à-dire le bloc 3 intégrant le détendeur 4 et les 3 vannes V1, V2 et V3 développé spécifiquement pour cette application, est une caractéristique nouvelle permettant un gain notable de place et d'encombrement.

L'invention, de par sa mobilité, permet de plus de conduire le gaz et son dispositif de distribution au plus près de l'équipement lors de tests ponctuels comme la qualification de sources ou l'évaluation de procédés. Les avantages qui en découlent sont par exemple le coût réduit du raccordement à l'équipement, une longueur de ligne réduite facilitant notamment la purge, une mobilité permettant de déplacer le système de distribution vers différents équipements.

La polyvalence et la mobilité du système lui permettent d'être utilisé et adapté sur un grand nombre de bouteilles de n'importe quel volume et sur différents équipements.

Une autre caractéristique du dispositif de distribution objet de la présente invention est qu'il s'agit d'un « gaz cabinet » miniature composé des fonctions principales d'un « gaz cabinet » standard. La structure a été spécialement étudiée afin de minimiser le coût, l'encombrement et le nombre de composants tout en gardant uniquement les fonctionnalités nécessaires.

Tous les composants utilisés sont conformes au standard de l'industrie du semi-conducteur.

## Revendications

1. Dispositif (2) de de gaz spéciaux apte à être monté sur une bouteille (B) de gaz munie d'un robinet comprenant un bloc multifonctions (3) abritant un circuit de fluide comprenant :
- un unique détendeur (4) haute pression,
- un système de purge constitué de trois vannes (V1, V2, V3) basse pression,
- un moyen de connexion (6) fluidique au robinet de la bouteille (B),
- une sortie permettant l'alimentation en gaz d'un équipement,
**caractérisé en ce que** le détendeur (4) haute pression est situé en amont du système de purge et **en ce que** ledit dispositif comprend une enceinte permettant de créer une zone sous extraction autour du robinet de ladite bouteille; ledit dispositif comprenant un collier (14) pourvu d'éléments de fixation tels qu'un taraudage, ainsi que des éléments complémentaires de fixation (13) au robinet monté sur la bouteille (B).

2. Dispositif selon la revendication 1 comprenant en outre un générateur de vide (5).

3. Dispositif selon l'une quelconque des revendications 1 ou 2 **caractérisé en ce que** le système de purge est un système dit de purge en croix comprenant un premier conduit (7) dit de pressurisation, un deuxième conduit (8) de sortie permettant de faire le vide et un troisième conduit (9) d'extraction permettant d'acheminer le gaz à distribuer vers un équipement (E), les trois conduits (7, 8 et 9) étant reliés en un point A situé en aval du détendeur (4).

4. Dispositif selon l'une quelconque des revendications 1 à 3, **caractérisé en ce que** le bloc multifonctions (3) comprend en outre un capteur (11) de pression en amont du détendeur (4).

5. Dispositif selon l'une quelconque des revendications 1 à 4, **caractérisé en ce que** le bloc multifonctions (3) comprend en outre un capteur de pression (11) en aval du détendeur (4) et en amont du système de purge.

6. Dispositif selon l'une quelconque des revendications 1 à 5, **caractérisé en ce qu'**il comprend un raccord (10) situé sur une de ses parois extérieures pouvant être connecté à un système d'extraction.

7. Dispositif selon l'une quelconque des revendications 1 à 6, comprenant un système de commande électrique (15) permettant l'actionnement des vannes pneumatiques (V1, V2, V3), et des cycles de purge.

8. Dispositif selon l'une quelconque des revendications 4 à 7, comprenant un système de commande électrique (15) permettant l'actionnement des vannes pneumatiques (V1, V2, V3), la gestion des capteurs de pression et des cycles de purge.

9. Dispositif selon l'une quelconque des revendications 1 à 8, **caractérisé en ce que** son volume est compris entre 1000 cm³ à 27000 cm³.

10. Dispositif (2) selon l'une quelconque des revendications 1 à 9, **caractérisé en ce que** le volume du bloc multifonctions (3) est compris entre 1/4 et 4/5, notamment entre 1/3 et 4/5 et de préférence entre 2/5 et 4/5 du volume dudit dispositif (2).

11. Ensemble de distribution (1) de gaz spéciaux constitué d'une bouteille (B) munie d'un robinet contenant du gaz à une pression P1 et d'un dispositif (2) de distribution de gaz spéciaux conforme à l'une quelconque des revendications 1 à 10 **caractérisé en ce que**, en position verticale d'utilisation, l'empreinte au sol dudit ensemble (1) est égale au diamètre de la bouteille (B).

12. Procédé de qualification d'une source de gaz spéciaux comprenant:
- une étape de soutirage d'un gaz à partir d'une bouteille (B) munie d'un robinet,
- une étape de distribution du gaz au moyen d'un dispositif de distribution **caractérisé en ce que** le dispositif de distribution est conforme à l'une quelconque des revendications 1 à 10.

13. Utilisation du dispositif selon l'une quelconque des revendications 1 à 10 pour la qualification d'une nouvelle source de gaz spéciaux.

14. Utilisation du dispositif selon l'une quelconque des revendications 1 à 10 pour l'évaluation de nouveaux procédés mettant en oeuvre l'utilisation de gaz spéciaux sur des machines existantes.

## Claims

1. Specialty gas delivery device (2) which can be mounted on a gas bottle (B) fitted with a tap, comprising a multifunction block (3) housing a fluid circuit comprising:
- a single high-pressure regulator (4);
- a purge system consisting of three low-pressure valves (V1, V2, V3);
- a fluid connection means (6) for connection to the tap of the bottle (B); and
- an outlet for supplying a piece of equipment with gas, **characterized in that** the high-pressure regulator (4) is located upstream of the purge system and **in that** said device comprises an enclosure enabling an extracting zone to be created around the tap of said bottle; said device including a clip (14) provided with fastening elements, such as an internal thread, and complementary elements (13) for fastening to the tap mounted on the bottle (B).

2. Device according to Claim 1, which further includes a vacuum generator (5).

3. Device according to either of Claims 1 and 2, **characterized in that** the purge system is what is called a cross-configured purge system comprising a pressurization first line (7), an output second line (8), enabling a vacuum to be created, and an extraction third line (9) for conveying the gas to be delivered to a piece of equipment (E), the three lines (7, 8 and 9) being joined at a point A located downstream of the regulator (4).

4. Device according to any one of Claims 1 to 3, **characterized in that** the multifunction block (3) further includes a pressure sensor (11) upstream of the regulator (4).

5. Device according to any one of Claims 1 to 4, **characterized in that** the multifunction block (3) further includes a pressure sensor (11) downstream of the regulator (4) and upstream of the purge system.

6. Device according to any one of Claims 1 to 5, **characterized in that** it includes a coupler (10) located on one of its outer walls and able to be connected to an extraction system.

7. Device according to any one of Claims 1 to 6, which includes an electrical control system (15) for actuating the pneumatic valves (V1 V2, V3) and the purge cycles.

8. Device according to any one of Claims 4 to 7, which includes an electrical control system (15) for actuating the pneumatic valves (V1, V2, V3) and for controlling the pressure sensors and the purge cycles.

9. Device according to any one of Claims 1 to 8, **characterized in that** its volume is between 1000 cm³ and 27000 cm³.

10. Device (2) according to any one of Claims 1 to 9, **characterized in that** the volume of the multifunction block (3) is between 1/4 and 4/5, especially between 1/3 and 4/5 and preferably between 2/5 and 4/5 of the volume of said device (2).

11. Assembly (1) for delivering specialty gases, which consists of a bottle (B) fitted with a tap and containing gas at a pressure P1 and a device (2) for delivering specialty gases in accordance with any one of Claims 1 to 11, **characterized in that**, in the vertical use position, the footprint of said assembly (1) is equal to the diameter of the bottle (B).

12. Method of qualifying a source of specialty gases, which comprises:
- a step of withdrawing a gas from a bottle (B) fitted with a tap; and
- a step of delivering the gas by means of a delivery device,
**characterized in that** the delivery device is in accordance with any one of Claims 1 to 10.

13. Use of the device according to any one of Claims 1 to 10 for qualifying a new specialty gas source.

14. Use of the device according to any one of Claims 1 to 10 for evaluating new processes employing the use of specialty gases on existing machines.

## Patentansprüche

1. Vorrichtung (2) für die Verteilung spezieller Gase, die an einer mit einem Hahn versehenen Gasflasche (B) montiert sein kann, mit einem Multifunktionsblock (3), der einen Fluidkreis aufnimmt, mit:
- einer einzigen Hochdruckentspannungseinrichtung (4),
- einem Entleerungssystem, das aus drei Niederdruckventilen (V1, V2, V3) gebildet ist,
- einem Mittel (6) für die fluidtechnische Verbindung mit dem Hahn der Flasche (B),
- einem Ausgang, der die Versorgung mit Gas einer Anlage ermöglicht,
**dadurch gekennzeichnet, dass** sich die Hochdruckentspannungseinrichtung (4) stromaufseitig des Entleerungssystems befindet und dass die Vorrichtung einen Behälter aufweist, der ermöglicht, um den Hahn der Flasche eine unter Extraktion stehende Zone zu erzeugen; wobei die Vorrichtung einen Kragen (14) aufweist, der mit Befestigungselementen wie etwa einem Gewinde sowie mit komplementären Elementen (13) für die Befestigung an dem an der Flasche (B) montierten Hahn versehen ist.

2. Vorrichtung nach Anspruch 1, die außerdem einen Unterdruckgenerator (5) enthält.

3. Vorrichtung nach einem der Ansprüche 1 oder 2, **dadurch gekennzeichnet, dass** das Entleerungssystem ein so genanntes Kreuzentleerungssystem ist, das eine erste so genannte Druckleitung (7), eine zweite Förderleitung (8), die die Herstellung des Unterdrucks ermöglicht, und eine dritte Extraktionsleitung (9), die die Leitung des zu verteilenden Gases zu einer Anlage (E) ermöglicht, enthält, wobei die drei Leitungen (7, 8 und 9) an einem Punkt A, der sich stromabseitig der Entspannungseinrichtung (4) befindet, verbunden sind.

4. Vorrichtung nach einem der Ansprüche 1 bis 3, **dadurch gekennzeichnet, dass** der Multifunktionsblock (3) außerdem einen Drucksensor (11) stromaufseitig der Entspannungseinrichtung (4) enthält.

5. Vorrichtung nach einem der Ansprüche 1 bis 4, **dadurch gekennzeichnet, dass** der Multifunktionsblock (3) außerdem einen Drucksensor (11) stromabseitig der Entspannungseinrichtung (4) und stromaufseitig des Entleerungssystems aufweist.

6. Vorrichtung nach einem der Ansprüche 1 bis 5, **dadurch gekennzeichnet, dass** sie einen Verbinder (10) aufweist, der sich an einer ihrer Außenwände befindet und mit einem Extraktionssystem verbunden werden kann.

7. Vorrichtung nach einem der Ansprüche 1 bis 6, mit einem elektrischen Steuersystem (15), das die Betätigung der pneumatischen Ventile (V1, V2, V3) und Entleerungszyklen ermöglicht.

8. Vorrichtung nach einem der Ansprüche 4 bis 7, mit einem elektrischen Steuersystem (15), das die Betätigung der pneumatischen Ventile (V1, V2, V3), die Steuerung der Drucksensoren und Entleerungszyklen ermöglicht.

9. Vorrichtung nach einem der Ansprüche 1 bis 8, **dadurch gekennzeichnet, dass** ihr Volumen im Bereich von 1000 cm³ bis 27000 cm³ liegt.

10. Vorrichtung (2) nach einem der Ansprüche 1 bis 9, **dadurch gekennzeichnet, dass** das Volumen des Multifunktionsblocks (3) im Bereich von 1/4 bis 4/5, insbesondere von 1/3 bis 4/5 und vorzugsweise von 2/5 bis 4/5 des Volumens der Vorrichtung (2) liegt.

11. Anordnung (1) für die Verteilung spezieller Gase, die aus einer mit einem Hahn versehenen Flasche (B), die ein mit einem Druck P1 beaufschlagtes Gas enthält, und einer Vorrichtung (2) für die Verteilung spezieller Gase nach einem der Ansprüche 1 bis 10 gebildet ist, **dadurch gekennzeichnet, dass** die Aufstandsfläche der Anordnung (1) auf dem Boden in der vertikalen Verwendungsposition gleich dem Durchmesser der Flasche (B) ist.

12. Verfahren für die Bewertung einer Quelle für spezielle Gase, das enthält:
- einen Schritt des Abzapfens eines Gases von einer mit einem Hahn versehenen Flasche (B),
- einen Schritt des Verteilens des Gases mittels einer Verteilungsvorrichtung, **dadurch gekennzeichnet, dass** die Verteilungsvorrichtung wie in einem der Ansprüche 1 bis 10 definiert beschaffen ist.

13. Verwendung der Vorrichtung nach einem der Ansprüche 1 bis 10 für die Bewertung einer neuen Quelle für spezielle Gase.

14. Verwendung der Vorrichtung nach einem der Ansprüche 1 bis 10 für die Bewertung neuer Verfahren, die die Verwendung spezieller Gase in vorhandenen Maschinen bewerkstelligen.
